# EUROPEAN PATENT SPECIFICATION

(11) **EP 3 734 949 B1**
(45) Date of publication and mention of the grant of the patent: **02.10.2024**
(21) Application number: 20167170.8
(22) Date of filing: 31.03.2020
(51) Int. Cl.: H04M 1/60, H04M 1/725, H04R 3/12, H04M 1/72412

(54) **WIRELESS LOUDSPEAKER WITH TETHERING MODE**
DRAHTLOSER LAUTSPRECHER MIT TETHERING-MODUS
HAUT-PARLEUR SANS FIL AVEC MODE TETHERING

(30) Priority: 29.04.2019 WO PCT/CN2019/084928
(43) Date of publication of application: 04.11.2020
(73) Proprietor: Harman International Industries, Incorporated, Stamford, CT 06901 (US)
(72) Inventor: TSUI, Chi Ho, Shenzhen,, Guangdong 518067 (CN)
(74) Representative: Kraus & Lederer PartGmbB

(56) References cited:
- WO-A1-2011/031910
- WO-A1-2018/098136
- US-A1- 2015 055 781
- US-A1- 2017 083 284

## Description

### TECHNICAL FIELD

The present disclosure generally relates to a speaker with broadcasting mode. More particularly the present disclosure relates to a speaker with the broadcasting mode that allows streaming audio to multiple speakers. The present disclosure further relates to a multi-speaker broadcasting system and a method thereof for implementing the broadcasting mode.

### BACKGROUND

Nowadays the Bluetooth portable speaker is widely used by general users. Usually, a speaker may be connected to a smart device, such as a mobile phone, a tablet, a computer or an audio playing device, to stream the music audio stream coming from the device via Advanced Audio Distribution Profile (A2DP) and reproduce the audio. However, limited by the only one Bluetooth connection existing on each device, there is only one speaker can connect to the device and thus this audio streaming is one-to-one only.

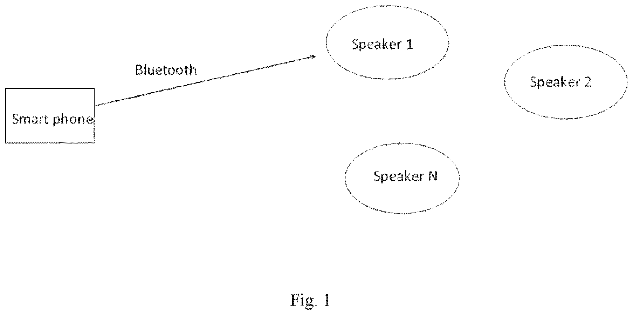

An example of the Bluetooth connection between a smart phone and a speaker is shown in Figure 1. In the architecture shown in Figure 1, only one speaker (speaker 1) among those shown speakers is connected to the smart phone 1 via Bluetooth and is receiving and reproducing the A2DP music taken from the smart phone 1.

Therefore, there may be a need to re-broadcast the audio stream from a speaker connecting to the audio playing device to multiple speakers so as to reproduce the audio stream on all the speakers therein at the same time.

US2015055781A1 discloses a wireless speaker device includes a speaker module, a processing module, a wireless module and a control module. The processing module may receive the mate signal sent by the adjacent wireless speaker device through the wireless module or send the mate signal sent to the adjacent wireless speaker device through the wireless module to establish a wireless multi-channel audio system.

WO2011031910A1 discloses electro-acoustical speaker devices that synchronously play audio received from a source. One speaker acts as the master and the other speaker acts as the slave. The master speaker receives digital audio data from a source and, in addition to playing the digital audio received from the source, the master speaker retransmits the digital audio to the slave speaker.

WO2018098136A1 discloses a wireless audio device tethering system is provided for including an intermediary device having at least one wireless transceiver that is configured to establish a first wireless connection with a first wireless audio device and a second Wireless connection with a second wireless audio device. Once tethering has been initiated, wireless audio signals can be streamed to the first wireless audio device and then re-streamed to the second wireless audio device.

US2017083284A1 discloses a wireless speaker system may include a primary speaker including a first transceiver and a second transceiver and programmed to receive audio data from a mobile device at the first transceiver, and at least one secondary speaker including a receiver and programmed to receive a wireless signal including the audio data from the primary speaker at the receiver, each speaker configured to transmit audio signals consistently there between based on the received audio data.

### SUMMARY

The present disclosure overcomes some of the aforementioned drawbacks by providing a Bluetooth speaker with the broadcasting mode.

This task is solved by the features of independent claims. Features of the dependent claims define embodiments.

In one embodiment, in the broadcasting mode, the provided Bluetooth speaker is configured to play a broadcaster role of a master mode of the broadcasting mode when an audio stream coming in from a smart device, wherein the speaker reproduces and rebroadcasts the audio stream to multiple slave speakers. The Bluetooth speaker is configured to play a receiver role of a slave mode of the broadcasting mode when the audio stream stops coming in from the smart device, wherein the speaker stops rebroadcasting the audio stream. The feature of re-broadcast the audio stream from the speaker connecting to the audio playing device to multiple speakers is called the broadcasting function or the PartyBoost function in this disclosure.

In one embodiment, the present disclosure further provides a system having multiple Bluetooth speakers with the broadcasting mode. There are always one master speaker connecting to an audio playing device and at least one slave speaker connecting to the master speaker in the system. In the broadcasting mode of the system, the master speaker is able to re-broadcast the audio stream from the audio playing device to the multiple slave speakers, and thus the audio stream may be reproduced on all the speakers in the system.

With those speakers in broadcasting mode, the system comprises a first Bluetooth speaker configured to play a broadcaster role of a master mode of the broadcasting mode when a first audio stream coming in from a first smart device, wherein the first Bluetooth speaker rebroadcasts the audio stream from the first smart device to a plurality of slave speakers, the plurality of slave speakers configured to play a receiver role of a slave mode of the broadcasting mode. A second Bluetooth speaker of the plurality of slave speakers is configured to automatically switch its role from the slave mode to the master mode of the broadcasting mode when a second audio stream coming in from a second smart device, wherein the second Bluetooth speaker rebroadcasts the second audio stream from the second smart device to at least one third Bluetooth speaker configured to play the receiver role of the slave mode of the broadcasting mode. The second Bluetooth speaker is configured to automatically switch its role from the master mode back to the slave mode of the broadcasting mode when stop receiving the second audio stream from the second smart device

In one embodiment, the present disclosure further provides a method for implementing the broadcasting mode of the multiple Bluetooth-speaker system. The method comprises the steps as follows: a first speaker configured to automatically play a broadcaster role of a master mode of the broadcasting mode when an first audio stream coming in from a first smart device by a first speaker, wherein the first speaker rebroadcasts the first audio stream from the first audio device to a plurality of slave speakers automatically configured to play a receiver role of a slave mode of the broadcasting mode. A second speaker of the a plurality of slave speakers configured to automatically switch its role from the slave mode to the master mode of the broadcasting mode when a second audio stream coming in from a second audio device, wherein the second speaker rebroadcasts the second audio stream from the second smart device to at least third speaker configured to play the receiver role of the slave mode of the broadcasting mode. The second speaker further configured to automatically switch its role from the master mode back to the slave mode of the broadcasting mode when stopping the second audio stream from the second audio device.

In another embodiment, the broadcasting mode in which the speaker performs the broadcasting function can be turned on and off by a single press of a button on the speaker, such as the PartyBoost key provided in the present disclosure. With the definition of the architecture and the user interface / user experience - the speaker will enter the broadcasting mode by a single press of the PartyBoost key. The speaker in the slave mode will turn into the master mode when there is A2DP audio stream coming in. Otherwise, when the A2DP audio stream stops the speaker will change back to the slave mode. In the broadcasting mode, the broadcaster or receiver role definition of a speaker will be completed automatically without user intervention.

Compared with the prior art, the claimed speaker is able to seamlessly switch between the two roles automatically without a reset. Accordingly, it is an object of the invention to improve the switching between the master and slave modes. Accordingly, in the broadcasting mode, the speaker can play the role of a master or a slave mode and can seamlessly switch between the two roles, especially can play the role of the slave mode. Any kind of reset and interaction by a user is not necessary.

### BRIEF DESCRIPTION OF THE DRAWINGS

The present disclosure may be better understood from reading the following description of non-limiting embodiments, with reference to the attached drawings. In the figures, like reference numerals designates corresponding parts, wherein:
Figure 1 is a schematic diagram illustrating the speakers working in the normal mode.
Figure 2A is a schematic diagram illustrating the master and slave speakers in the broadcasting mode 1 according to an embodiment of the invention.
Figure 2B is a schematic diagram illustrating the master and slave speakers in the broadcasting mode 2 according to another embodiment of the invention.
Figure 3 is a schematic diagram illustrating one example of the speaker-button layout the speaker according to an embodiment of the invention.
Figure 4 is a schematic diagram illustrating the broadcast-state change on the speaker according to an embodiment of the invention.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

As can be understood by those skilled in the art, a speaker will be described as a unit of speaker participating in a multi-speaker system with the broadcasting mode in this disclosure in equivalent term.

One of the objects of the invention is to provide a speaker with a broadcasting mode for re-broadcasting the audio stream from the speaker connecting to the audio playing device to multiple portable speakers, so as to reproduce the audio on all the speakers in the system.

The speaker works in the Normal Mode by default when turning on the unit. There is no any broadcasting function in the Normal Mode. When switching the speaker into the broadcasting mode, the speaker in the broadcasting mode will play either a broadcaster role or a receiver role. The speaker successfully paired with the smart phone with audio streaming will take the broadcaster role as a master speaker in the system; the speaker either not paired with any smart phone or paired with smart phone without any audio streaming will take the receiver role as a slave speaker. In the broadcasting mode, there is always one master speaker in the broadcasting system which may connect to multiple slave speakers, and thus the master speaker may re-broadcast the audio stream from this master speaker to multiple slave speakers, so as to reproduce the audio on all the speakers.

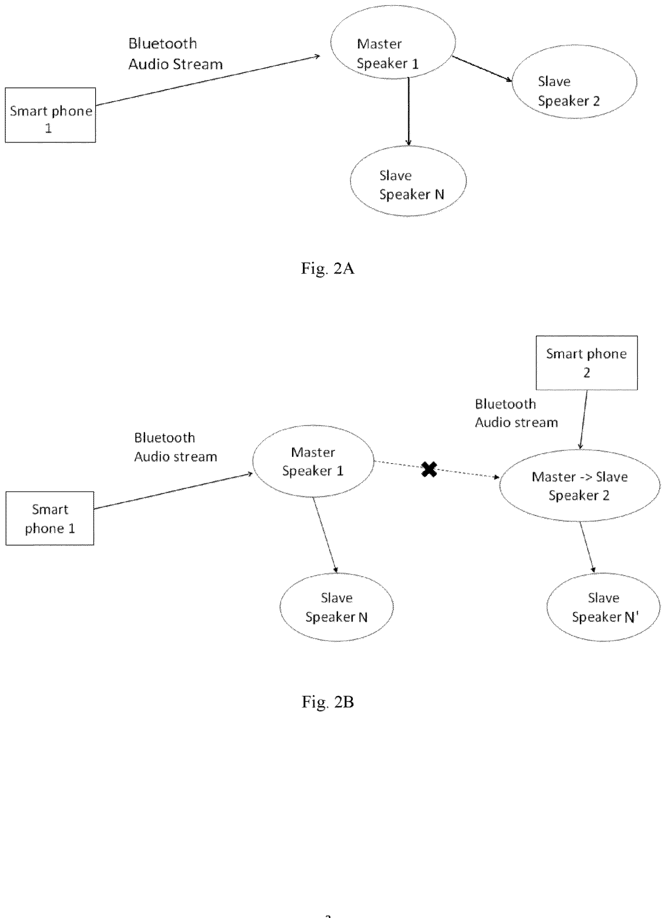

In one embodiment, Figure 2A shows a schematic diagram of the broadcasting mode 1 as provided in the present disclosure. In particular, the master speaker 1 in the master mode is connected to the smart phone 1 by Bluetooth. The slave speaker 2 and the slave speaker N in slave mode are connected to the master speaker 1. There may be other slave speakers connected to the master speaker 1 but not shown in the Figures. During the broadcasting mode 1, the master speaker 1 obtains audio source from the smart phone 1 via A2DP, and plays the broadcaster role to re-broadcasting the audio stream to the multiple slave speakers 2, N. The slave speakers 2, N each plays the receiver role and receives the audio stream broadcasted from the master speaker 1. The connections between the master speaker 1 and the slave speakers 2, N can be in the way of such as a proprietary protocol based on Bluetooth Low Energy (BLE) defined by the applicant.

In the broadcasting mode 1 in Figure 2A, the master speaker 1 is streaming the audio stream to the multiple slave speakers 2, N. As long as the smart phone 1 continues to play music and is within a reachable range from the speakers 1, the master speaker 1 will keep taking and reproducing the A2DP audio stream from the smart phone 1 and re-broadcasting to the slave speakers 2, N. And the slave speakers 2, N will keep receiving and reproducing the audio stream from the master speaker 1 when they are reachable from the master speaker 1. Typically, the role of master or slave of the speakers 1, 2, N must be defined beforehand and set up by using such as a smartphone app or a special-designed button combination press on each of the speaker.

In another embodiment, Figure 2B shows a schematic diagram of the broadcasting mode 2 as provided in the present disclosure. In the broadcasting mode 2, the speaker plays a broadcaster role or a receiver role and is able to switch between the two roles. By way of example, the speaker 2 in the slave mode will turn into be the master when there is A2DP audio stream coming in, for example from another smart phone 2. When the A2DP audio stream stops the master mode of the speaker 2 will change back to the slave. The speaker 2 may switch between the master and slave seamlessly and automatically without reset. All the role definition may be completed automatically without user intervention.

Still referring to Figure 2B, by way of example, the speaker 2 in the slave mode turns into the master when A2DP audio stream comes from the smart phone 2. After the speaker 2 turns its role from the receiver to the broadcaster, another slave speaker N' for example may add to connect to the master speaker 2 and starts receiving the broadcasting audio stream from it. The slave speaker N' may be searching for the strongest signal source when gets to connect with the speaker 2 with the strongest signal source instead of the speaker 1 as an example. In the invention, a slave speaker will only search for the strongest source until it does not receive any broadcasting audio stream from the original master speaker.

Alternatively, the speaker according to the invention is provided with a button, and the broadcasting mode of the speaker can be turned on and off by single pressing this button. Once the button is pressed, the speaker enters the broadcasting mode 2.

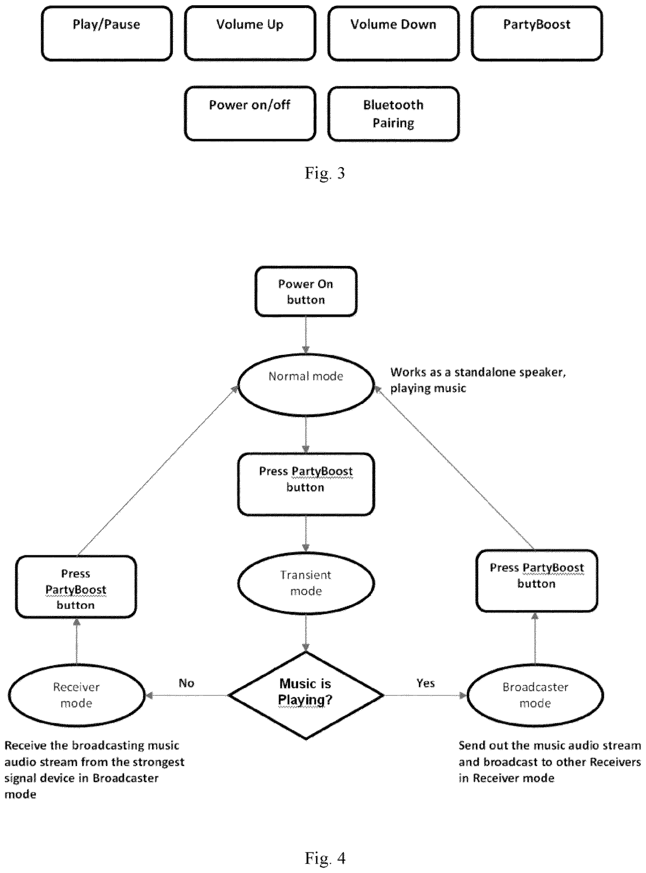

Figure 3 shows an embodiment of the button layout on the speaker of the present disclosure. Since the portable speaker is target for the general users, the user interface of the speaker shall be simple. In Figure 3, in addition to the buttons typically set on a speaker, such as the Bluetooth pairing button, the power on/off button, the play/pause button, the volume up button and the volume down button, there is another button disposed on the speaker, i.e., the PartyBoost key shown in Figure 3. By using simple and intuitive one-button press of this PartyBoost key, the speaker enters the broadcasting mode 2 and may automatically switch between the master and slave modes.

A single press of the button of such PartyBoost key may start the initialization of the broadcasting mode of the speaker. The application layer is configured to enable this Initialization function, including such as receive the button pressing events, determine the states of the audio playing, and decide the master/ slave modes.

A single press of the button of such PartyBoost key may further start the Broadcast State Machine Initialization. There is a public interface provided on each speaker for initializing the Broadcast state machine, once the interface is called, the Broadcaster role will be initialized, and the state machine runs automatically.

As shown in Figure 4, the speaker according to the invention contains 4 sub-states: the Normal Mode, the Receiver Mode, the Broadcaster Mode, and the Transient Mode. Among these 4 sub-states, the Normal, Receiver, and Broadcaster modes are the stable modes, and the Transient Mode is the intermediate state.

### Normal Mode

The speaker works in the Normal Mode by default when turning on the unit. There is no any broadcast function in the Normal Mode. By way of example, the speaker in the Normal mode as shown in Figure 4 works as a standalone speaker playing music. A case of the speaker in the Normal Mode may refer to the speaker 1 in Figure 1.

Bluetooth A2DP is established on the speaker in the Normal Mode with the device. Once the PartyBoost key on the speaker is pressed in the Normal Mode, depending on the current music playing state, the speaker will enter the Broadcaster Mode if the music is playing, otherwise the speaker will enter the Receiver Mode.

The only way to switch the speaker between the Broadcaster Mode or the Receiver Mode and the Normal Mode is via the press of the PartyBoost Key, or power off the unit and then power on it.

### Receiver Mode

The Receiver Mode is a stable sub-state of the broadcasting mode. The speaker works in this Receiver Mode as a slave speaker to receive audio stream from the master speaker of the broadcasting system. In the embodiment as shown in Figure 4, The speaker in the Receiver mode receives the broadcasting music audio stream from the strongest signal device in the Broadcaster mode. In addition, the speaker in the Receiver Mode is also advertising the existing of the slave speaker to other applications. Once the PartyBoost key is pressed in Receiver mode, the speaker will go back to the Normal mode, and the speaker will stop receiving or advertising then.

### Broadcaster Mode

The Broadcaster Mode is also a stable sub-state of the broadcasting mode. The speaker works in this Broadcaster Mode as a master speaker to re-broadcast the audio stream to multiple slave speakers. In the embodiment as shown in Figure 4, The speaker in the Broadcaster mode sends out the music audio steam and broadcasts to other receivers in Receiver mode. In addition, the speaker in the Broadcaster Mode is also scanning other applications so as to synchronize information therebetween. Once the PartyBoost key is pressed in the Broadcaster Mode, the speaker will go back to the Normal Mode, and the speaker will stop broadcasting and scanning then.

The Broadcaster and Receiver Modes are two stable sub-states of the speaker performing the broadcast function, and the speaker can switch dynamically and automatically between them. Once the A2DP music is stopped, the speaker will switch to the Receiver Mode automatically. Otherwise, once the A2DP music is resumed, the speaker will switch to the Broadcaster Mode automatically.

### Transient Mode

In any of the above stable modes, if the speaker has a new event and needs to do some actions for it and also waits for the response for that action, it switches to the Transient Mode.

The Transient Mode is an unstable intermediate sub-state of the broadcasting mode.

Once the speaker gets the response and no need to wait something else further, it switches back to the previous stable mode. This unstable mode is transient and short to make sure the speaker can clean up the scene before switching, as all the messages transmit may be asynchronous in the system. The state switching is not allowed to proceed in the unstable mode. Once the speaker goes back to a stable mode, it will switch to the target mode automatically.

The Details of Dynamic Switching the Broadcast state machine are described as reference to Figure 4 as follow:

### Normal Mode -> Receiver Mode

Pressing the PartyBoost key on the speaker, if no music (Bluetooth A2DP is established with the device) is playing, the speaker enters the Transient Mode and begins to switch to the Receiver Mode. If the Receiver role has been initialized already, it enters the Receiver Mode directly. Otherwise if the Broadcaster role has been initialized already, it destroys the Broadcaster role first, after destroyed successfully, then the Receiver role will be initialized automatically. When the initialization is completed, such as the Configure Confirm event is received, the speaker enters the Receiver Mode.

### Receiver Mode -> Normal Mode

Pressing the PartyBoost key on the speaker, the speaker will exit the Receiver Mode. If the speaker is receiving the music from broadcaster, it would stop playing the music and goes to the Normal Mode. If no music is being played, it goes to the Normal Mode directly.

### Normal Mode-> Broadcaster Mode

Pressing the PartyBoost key on the speaker, if music is playing, the speaker enters the Transient Mode and begins to switch to the Broadcaster Mode. Prior to entering the Broadcaster Mode, If the Receiver role has been initialized already, it destroys the Receiver Role first. After destroyed successfully, the Broadcaster role will be initialized then. If the Broadcaster role has been initialized already, then the speaker configures the Broadcaster. Otherwise once Configure Confirm event is received, it starts broadcaster. Once Start Confirm event is received, the speaker enters the Broadcaster Mode.

### Broadcaster Mode -> Normal Mode

Pressing the PartyBoost key on the speaker, the speaker will exit the Broadcaster Mode. It enters the Transient Mode and stops broadcasting. Once Stop Confirm event is received, the speaker goes to the Normal Mode.

### Receiver ->Broadcaster Mode

If the speaker starts playing the A2DP music in the Receiver Mode, it will switch to the Broadcaster Mode automatically. The audio stream coming in via A2DP means that a Bluetooth connection to this speaker has been established, such as to a smart device playing the A2DP audio stream.

To switch the speaker to the Broadcaster Mode from the Receiver Mode, the speaker enters the Transient Mode first and destroys the Receiver role. Once DestroyConfirm event is received, then the speaker initializes the Broadcaster role. The remaining steps are the same as switching from Normal Mode to Broadcaster Mode.

### Broadcaster ->Receiver Mode

If the speaker in Broadcaster Mode stops playing the A2DP music, it will switch to the Receiver Mode automatically.

To switch to the Receiver Mode from the Broadcaster Mode, the speaker enters the Transient Mode first and destroys the Broadcaster role. Once the Broadcaster role is destroyed, such as DestroyConfirm event is received, then the speaker initializes the Receiver role. The remaining steps are the same as switching from the Normal Mode to the Receiver Mode.

## Claims

1. A Bluetooth speaker with a broadcasting mode configured to
work in a normal mode as a standalone speaker playing music by default when turned on; and
when switching into the broadcasting mode:
play a broadcaster role of a master mode when successfully paired with a smart device with Advanced Audio Distribution Profile, A2DP, audio streaming, wherein
as long as the smart device continues to play music, the speaker reproduces and rebroadcasts the audio streaming to multiple salve Bluetooth speakers; and
play a receiver role of a slave mode when either not paired with any smart device or paired with smart device without any audio streaming,
wherein the Bluetooth speaker is configured to automatically switch its role from the slave mode to the master mode when there is the A2DP audio stream coming in and to automatically switch its role from the master mode to the slave mode when the A2DP audio stream stops.

2. The Bluetooth speaker of claim 1, wherein the speaker is provided with a button, by a single press of which the speaker is configured to be turned on and off the broadcasting mode.

3. The Bluetooth speaker of claim 2, wherein the broadcasting mode comprises a Broadcaster Mode, and the speaker transfers into the Broadcaster Mode when the audio stream coming in is Advanced Audio distribution Profile, A2DP, audio stream from the smart device.

4. The Bluetooth speaker of claim 2 or 3, wherein the broadcasting mode comprises a Receiver Mode, and the speaker enters the Receiver Mode when no A2DP audio stream from the smart device coming in.

5. The Bluetooth speaker of any of claims 2 to 4, wherein the broadcasting mode further comprises a Transient Mode, during which the speaker is waiting for an event.

6. The Bluetooth speaker of any of the preceding claims, wherein the smart device comprises a mobile phone, a tablet or a computer with Bluetooth connectivity.

7. A system comprising multiple Bluetooth speakers with a broadcasting mode, comprising:
a first Bluetooth speaker configured to play a role of a master mode of the broadcasting mode when receiving a first audio stream from a first smart device, wherein the first Bluetooth speaker rebroadcasts the audio stream from the first smart device to a plurality of slave speakers, the plurality of slave speakers configured to play the role of the slave mode of the broadcasting mode;
wherein
a second Bluetooth speaker of the plurality of slave speakers is configured to automatically switch its role from the slave mode to the master mode of the broadcasting mode when receiving a second audio stream from a second smart device, wherein the second Bluetooth speaker rebroadcasts the second audio stream from the second smart device to at least one third Bluetooth speaker configured to play the role of the slave mode of the broadcasting mode; and
the second Bluetooth speaker configured to automatically switch its role from the master mode back to the slave mode of the broadcasting mode when stop receiving the second audio stream from the second smart device.

8. The system of claim 7, wherein the first, second and third Bluetooth speakers are each provided with a button, by a single press of which the first, second and third speaker configured to be turned on and off the broadcasting mode.

9. A method for implementing a broadcasting mode in a multiple Bluetooth-speaker system, wherein the method comprises the steps of:
a first Bluetooth speaker automatically playing a role of a master mode of the broadcasting mode by receiving a first audio stream from a first smart device by the first Bluetooth speaker,
wherein the first Bluetooth rebroadcasts audio stream from the first smart device to a plurality of slave speakers, the plurality of slave speakers playing the role of the slave mode of the broadcasting mode;
wherein a second Bluetooth speaker of the plurality of slave speakers automatically switches its role from the slave mode to the master mode of the broadcasting mode when receiving a second audio stream from a second smart device, wherein the second Bluetooth speaker rebroadcasts the second audio stream from the second smart device to at least one third Bluetooth speaker playing the role of the slave mode of the broadcasting mode; and
the second Bluetooth speaker automatically switching its role from the master mode back to the slave mode of the broadcasting mode when stop receiving the second audio stream from the second smart device.

10. The method of claim 9, wherein the first, second and third Bluetooth speakers are each provide with a button, by a single press of which the first, second and third speaker can turn on and off the broadcasting mode.

## Patentansprüche

1. Bluetooth-Lautsprecher mit einem Sendemodus, der zu Folgendem konfiguriert ist:
in einem Normalmodus als eigenständiger Lautsprecher zu arbeiten, der standardmäßig Musik abspielt, wenn er eingeschaltet ist; und
beim Umschalten in den Sendemodus:
eine Senderrolle eines Master-Modus zu spielen, wenn er erfolgreich mit einer intelligenten Vorrichtung mit Advanced Audio Distribution Profile(A2DP)-Audiostreaming gekoppelt ist,
wobei der Lautsprecher, solange die intelligente Vorrichtung Musik abspielt, das Audiostreaming reproduziert und an mehrere Slave-Bluetooth-Lautsprecher weitersendet; und
eine Empfängerrolle eines Slave-Modus zu spielen, wenn entweder keine intelligente Vorrichtung oder eine intelligente Vorrichtung ohne Audiostreaming gekoppelt ist,
wobei der Bluetooth-Lautsprecher dazu konfiguriert ist, seine Rolle automatisch von dem Slave-Modus in den Master-Modus umzuschalten, wenn der A2DP-Audiostrom eintrifft, und seine Rolle automatisch von dem Master-Modus in den Slave-Modus umzuschalten, wenn der A2DP-Audiostrom aufhört.

2. Bluetooth-Lautsprecher nach Anspruch 1, wobei der Lautsprecher mit einer Taste bereitgestellt ist, durch deren einmaliges Drücken der Lautsprecher dazu konfiguriert ist, den Sendemodus ein- und auszuschalten.

3. Bluetooth-Lautsprecher nach Anspruch 2, wobei der Sendemodus einen Sendermodus umfasst, und der Lautsprecher in den Sendermodus übergeht, wenn der Audiostrom, der eintrifft, ein Advanced Audio Distribution Profile(A2DP)-Audiostrom von der intelligenten Vorrichtung ist.

4. Bluetooth-Lautsprecher nach Anspruch 2 oder 3, wobei der Sendemodus einen Empfängermodus umfasst und der Lautsprecher in den Empfängermodus eintritt, wenn kein A2DP-Audiostrom von der intelligenten Vorrichtung eintrifft.

5. Bluetooth-Lautsprecher nach einem der Ansprüche 2 bis 4, wobei der Sendemodus ferner einen Übergangsmodus umfasst, während dem der Lautsprecher auf ein Ereignis wartet.

6. Bluetooth-Lautsprecher nach einem der vorhergehenden Ansprüche, wobei die intelligente Vorrichtung ein Mobiltelefon, ein Tablet oder einen Computer mit Bluetooth-Konnektivität umfasst.

7. System, umfassend mehrere Bluetooth-Lautsprecher mit einem Sendemodus, umfassend:
einen ersten Bluetooth-Lautsprecher, der dazu konfiguriert ist, eine Rolle eines Master-Modus des Sendemodus zu spielen, wenn er einen ersten Audiostrom von einer ersten intelligenten Vorrichtung empfängt, wobei der erste Bluetooth-Lautsprecher den Audiostrom von der ersten intelligenten Vorrichtung an eine Vielzahl von Slave-Lautsprechern weitersendet, wobei die Vielzahl von Slave-Lautsprechern dazu konfiguriert ist, die Rolle des Slave-Modus des Sendemodus zu spielen;
wobei
ein zweiter Bluetooth-Lautsprecher der Vielzahl von Slave-Lautsprechern dazu konfiguriert ist, seine Rolle automatisch von dem Slave-Modus in den Master-Modus des Sendemodus umzuschalten, wenn er einen zweiten Audiostrom von einer zweiten intelligenten Vorrichtung empfängt, wobei der zweite Bluetooth-Lautsprecher den zweiten Audiostrom von der zweiten intelligenten Vorrichtung an mindestens einen dritten Bluetooth-Lautsprecher weitersendet, der dazu konfiguriert ist, die Rolle des Slave-Modus des Sendemodus zu spielen; und
der zweite Bluetooth-Lautsprecher dazu konfiguriert ist, seine Rolle automatisch von dem Master-Modus zurück in den Slave-Modus des Sendemodus umzuschalten, wenn das Empfangen des zweiten Audiostroms von der zweiten intelligenten Vorrichtung aufhört.

8. System nach Anspruch 7, wobei der erste, zweite und dritte Bluetooth-Lautsprecher jeweils mit einer Taste bereitgestellt sind, durch deren einmaliges Drücken der erste, zweite und dritte Lautsprecher dazu konfiguriert sind, den Sendemodus ein- und auszuschalten.

9. Verfahren zum Implementieren eines Sendemodus in einem System mit mehreren Bluetooth-Lautsprechern, wobei das Verfahren die folgenden Schritte umfasst:
automatisches Spielen einer Rolle eines Master-Modus des Sendemodus durch einen ersten Bluetooth-Lautsprecher, indem er einen ersten Audiostrom von einer ersten intelligenten Vorrichtung durch den ersten Bluetooth-Lautsprecher empfängt, wobei der erste Bluetooth-Lautsprecher den Audiostrom von der ersten intelligenten Vorrichtung an eine Vielzahl von Slave-Lautsprechern weitersendet, wobei die Vielzahl von Slave-Lautsprechern die Rolle des Slave-Modus des Sendemodus spielt;
wobei ein zweiter Bluetooth-Lautsprecher der Vielzahl von Slave-Lautsprechern seine Rolle automatisch von dem Slave-Modus in den Master-Modus des Sendemodus umschaltet, wenn er einen zweiten Audiostrom von einer zweiten intelligenten Vorrichtung empfängt,
wobei der zweite Bluetooth-Lautsprecher den zweiten Audiostrom von der zweiten intelligenten Vorrichtung an mindestens einen dritten Bluetooth-Lautsprecher weitersendet, der die Rolle des Slave-Modus des Sendemodus spielt; und
automatisches Umschalten durch den zweiten Bluetooth-Lautsprecher seiner Rolle von dem Master-Modus zurück in den Slave-Modus des Sendemodus, wenn das Empfangen des zweiten Audiostroms von der zweiten intelligenten Vorrichtung aufhört.

10. Verfahren nach Anspruch 9, wobei der erste, zweite und dritte Bluetooth-Lautsprecher jeweils mit einer Taste bereitgestellt sind, durch deren einmaliges Drücken der erste, zweite und dritte Lautsprecher den Sendemodus ein- und ausschalten kann.

## Revendications

1. Haut-parleur Bluetooth avec un mode diffusion configuré pour fonctionner en mode normal comme un haut-parleur autonome diffusant de la musique par défaut lorsqu'il est activé ; et lors du passage en mode diffusion :
jouer un rôle de diffuseur d'un mode maître lorsqu'il est associé avec succès à un dispositif intelligent avec diffusion audio en continu de profil de distribution audio avancé, A2DP, dans lequel tant que le dispositif intelligent continue de lire de la musique, le haut-parleur reproduit et rediffuse la diffusion audio en continu vers plusieurs haut-parleurs Bluetooth esclaves ; et
jouer un rôle de récepteur d'un mode esclave lorsqu'il n'est pas couplé à un dispositif intelligent ou lorsqu'il est couplé à un dispositif intelligent sans aucune diffusion audio en continu,
dans lequel le haut-parleur Bluetooth est configuré pour basculer automatiquement son rôle du mode esclave au mode maître lorsqu'un flux audio A2DP arrive et pour basculer automatiquement son rôle du mode maître au mode esclave lorsque le flux audio A2DP s'arrête.

2. Haut-parleur Bluetooth selon la revendication 1, dans lequel le haut-parleur est doté d'un bouton, par une simple pression duquel le haut-parleur est configuré pour être activé et désactivé en mode diffusion.

3. Haut-parleur Bluetooth selon la revendication 2, dans lequel le mode diffusion comprend un mode diffuseur, et le haut-parleur passe dans le mode diffuseur lorsque le flux audio entrant est un flux audio de profil de distribution audio avancé, A2DP, provenant du dispositif intelligent.

4. Haut-parleur Bluetooth selon la revendication 2 ou 3, dans lequel le mode diffusion comprend un mode récepteur, et le haut-parleur entre dans le mode récepteur lorsqu'aucun flux audio A2DP n'arrive depuis le dispositif intelligent.

5. Haut-parleur Bluetooth selon l'une quelconque des revendications 2 à 4, dans lequel le mode diffusion comprend également un mode transitoire, pendant lequel le haut-parleur attend un événement.

6. Haut-parleur Bluetooth selon l'une quelconque des revendications précédentes, dans lequel le dispositif intelligent comprend un téléphone mobile, une tablette ou un ordinateur avec connectivité Bluetooth.

7. Système comprenant plusieurs haut-parleurs Bluetooth avec un mode diffusion, comprenant :
un premier haut-parleur Bluetooth configuré pour jouer un rôle d'un mode maître du mode diffusion lors de la réception d'un premier flux audio provenant d'un premier dispositif intelligent, dans lequel le premier haut-parleur Bluetooth rediffuse le flux audio provenant du premier dispositif intelligent vers une pluralité de haut-parleurs esclaves, la pluralité de haut-parleurs esclaves est configurée pour jouer le rôle du mode esclave du mode diffusion ;
dans lequel
un deuxième haut-parleur Bluetooth de la pluralité de haut-parleurs esclaves est configuré pour basculer automatiquement son rôle du mode esclave au mode maître du mode diffusion lors de la réception d'un second flux audio provenant d'un second dispositif intelligent, dans lequel le deuxième haut-parleur Bluetooth rediffuse le second flux audio provenant du second dispositif intelligent vers au moins un troisième haut-parleur Bluetooth configuré pour jouer le rôle du mode esclave du mode diffusion ; et
le deuxième haut-parleur Bluetooth étant configuré pour basculer automatiquement son rôle du mode maître vers le mode esclave du mode diffusion lorsqu'il cesse de recevoir le second flux audio du second dispositif intelligent.

8. Système selon la revendication 7, dans lequel les premier, deuxième et troisième haut-parleurs Bluetooth sont chacun dotés d'un bouton, par une simple pression duquel les premier, deuxième et troisième haut-parleurs sont configurés pour être activés et désactivés en mode diffusion.

9. Procédé de mise en œuvre d'un mode diffusion dans un système à haut-parleurs Bluetooth multiples, dans lequel le procédé comprend les étapes suivantes :
un premier haut-parleur Bluetooth jouant automatiquement un rôle d'un mode maître du mode diffusion en recevant un premier flux audio provenant d'un premier dispositif intelligent par le premier haut-parleur Bluetooth, dans lequel le premier haut-parleur Bluetooth rediffuse un flux audio provenant du premier dispositif intelligent vers une pluralité de haut-parleurs esclaves, la pluralité de haut-parleurs esclaves jouant le rôle du mode esclave du mode diffusion ;
dans lequel un deuxième haut-parleur Bluetooth de la pluralité de haut-parleurs esclaves bascule automatiquement son rôle du mode esclave au mode maître du mode diffusion lors de la réception d'un second flux audio provenant d'un second dispositif intelligent, dans lequel le deuxième haut-parleur Bluetooth rediffuse le second flux audio provenant du second dispositif intelligent vers au moins un troisième haut-parleur Bluetooth jouant le rôle du mode esclave du mode diffusion ; et le deuxième haut-parleur Bluetooth basculant automatiquement son rôle du mode maître vers le mode esclave du mode diffusion lorsqu'il cesse de recevoir le second flux audio du second dispositif intelligent.

10. Procédé selon la revendication 9, dans lequel les premier, deuxième et troisième haut-parleurs Bluetooth sont chacun dotés d'un bouton, par une simple pression duquel les premier, deuxième et troisième haut-parleurs peuvent être activés et désactivés en mode diffusion.
